# EUROPEAN PATENT SPECIFICATION

(11) **EP 3 260 656 B1**
(45) Date of publication and mention of the grant of the patent: **04.01.2023**
(21) Application number: 17177832.7
(22) Date of filing: 26.06.2017
(51) Int. Cl.: F01D 5/00, B23P 6/00

(54) **METHOD AND SYSTEM FOR REPAIRING AN AIRFOIL OF A COMPRESSOR BLADE OF A GAS TURBINE ENGINE**
VERFAHREN UND SYSTEM ZUR REPARATUR EINES VERDICHTERSCHAUFELBLATTS
PROCÉDÉ ET SYSTÈME DE RÉPARATION D'UNE PALE D'AUBE DE COMPRESSEUR D'UN MOTEUR À TURBINE À GAZ

(30) Priority: 24.06.2016 US 201615191885
(43) Date of publication of application: 27.12.2017
(73) Proprietor: Raytheon Technologies Corporation, Farmington, CT 06032 (US)
(72) Inventor: MORRIS, Robert J., Portland, CT 06480 (US); PARENTE, Anthony R., West Hartford, CT 06119 (US); SCHWARZ, Frederick M., Glastonbury, CT 06033 (US); SIDWELL, Carroll V., Wethersfield, CT 06109 (US)
(74) Representative: Dehns

(56) References cited:
- US-A1- 2002 123 827
- US-A1- 2002 128 790
- US-A1- 2003 167 616
- US-A1- 2005 033 555

## Description

### TECHNICAL FIELD OF THE INVENTION

This application relates to a method and system for providing direction on blends in gas turbine engine airfoils. The invention relates to a method of repairing an airfoil of a compressor blade of a gas turbine engine and to a repair recommendation system for an airfoil of a compressor blade of a gas turbine engine.

### BACKGROUND OF THE INVENTION

Gas turbine engines are known and typically include a fan delivering air into a compressor where the air is compressed. The compressed air is delivered into a combustor where it is mixed with fuel and ignited. Products of this combustion pass downstream over turbine rotors, driving them to rotate. The compressor and turbine sections include a plurality of airfoils, including rotating blades and static vanes.

During operation, these airfoils can become damaged. There are two general ways that an airfoil can be repaired. In one, the turbine or compressor rotor is taken off the engine and repaired in a shop. This is undesirable, as there is down time and expense involved. A second way that an airfoil can be repaired is while still on the engine. For example in some engines, there are borescope openings which allow maintenance tools to enter through an engine housing. In other engines, large sections of the case may be removed to provide access to the damaged airfoil(s). If an airfoil can be repaired while still on the engine, the maintenance down time and cost is reduced.

One type of repair is a blend. A blend essentially removes material that encompasses the damage, and smooths out the area of an airfoil around the location of where the damage occurred. Damage may consist of a dent, tear, crack or partially removed material.

Currently, there are limits on the blend sizes and locations which are set forth in guide manuals provided by the engine manufacturer to the engine maintainer.

If a required blend would exceed the limit, the airfoil in question must be removed from the engine. This requires removal of the engine from the aircraft, and may also require a disassembly and rebuild of the impacted module, and substantial down time and cost.

Prior art methods for developing suggested repairs are disclosed in US 2003/167616 A1, US 2002/123827 A1, US 2005/033555 A1 and US 2002/128790.

US 2003/167616 A1 discloses a method for repairing a part, such as a turbine blade. US 2002/123827 A1 discloses a method for performing triage of a turbine part to facilitate its repair. US 2005/033555 A1 discloses a method for evaluating and repairing damaged turbine or compressor blades. US 2002/128790 A1 discloses a method for determining a recommended set of repair processes to refurbish a part, e.g. of a gas turbine engine.

### SUMMARY OF THE INVENTION

In one aspect, a method of repairing an airfoil of a compressor blade of a gas turbine engine is provided in accordance with claim 1.

In an embodiment, the history includes at least one of a number of flights of the engine, and/or information with regard to an actual condition of the engine.

In another embodiment according to any of the previous embodiments, the final recommendation is also based upon stored history of components in the engine other than the particular airfoil.

In another embodiment according to any of the previous embodiments, the history of prior blends in the particular airfoil is considered in the assessment of step (d).

In another embodiment according to any of the previous embodiments, the initial blend recommendation includes at least a recommended blend depth, flat length, and percent span.

In another embodiment according to any of the previous embodiments, at least one of pressure, temperature, and speed history for an engine incorporating the damaged airfoil is considered at step (d).

In another embodiment according to any of the previous embodiments, the final blend recommendation is transmitted to a maintenance operator.

In another embodiment according to any of the previous embodiments, the maintenance operator provides performed blend information back to a repair system with regard to the performance of the final blend recommendation.

In another embodiment according to any of the previous embodiments, the performed blend information is stored in the repair system, such that it can be considered if the particular airfoil, or a module incorporating the particular airfoil, is subject to further damage.

In another embodiment according to any of the previous embodiments, the final blend recommendation includes both a blend to be performed, but also instruction to use the particular airfoil in an engine subjecting the particular airfoil to less stress or to lower thrust.

In another aspect, a repair recommendation system for an airfoil of a compressor blade of a gas turbine engine is provided in accordance with claim 11.

In an embodiment, each of the evaluation module and the repair module are software, and are stored in the non-transitory memory.

In another embodiment according to any of the previous embodiments, the receiver is configured for receiving information of a blend performed on the particular airfoil, and updating stored information with regard to the airfoil.

In another embodiment according to any of the previous embodiments, the controller is configured to develop a recommendation at least in part upon the condition of other components in the engine.

In another embodiment according to any of the previous embodiments, the controller is configured to develop a final recommendation that a blend is not recommended for the airfoil.

These and other features may be best understood from the following drawings and specification.

### BRIEF DESCRIPTION OF THE DRAWINGS

Figure 1A is a schematic view of a gas turbine engine.
Figure IB shows an airfoil.
Figure 1C shows a repaired airfoil.
Figure 2 shows the existing method of specifying blend repair allowables.
Figure 3 is a schematic showing a series of information exchanges leading to a repair suggestion.
Figure 4 schematically shows a repair operation.

### DETAILED DESCRIPTION

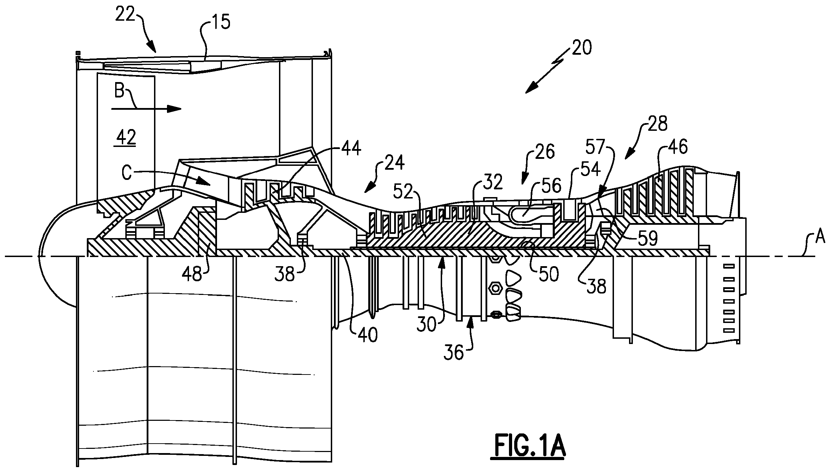

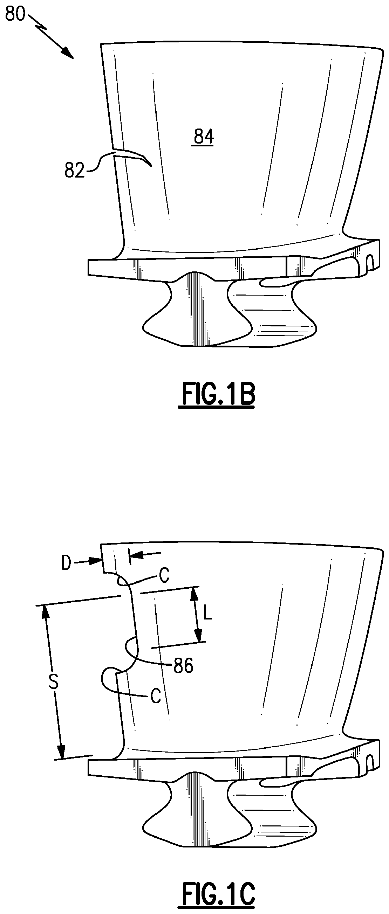

Figure 1A schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 and high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K × ⁹/₅). The "Low corrected fan tip speed" as disclosed herein according to one non-limiting embodiment is less than about 1150 ft / second (350.5 meters/second).

Figure IB shows a turbine or compressor blade 80. As shown, a crack 82 has formed in an airfoil 84. While the crack is shown in a blade, it should be understood that static vanes also have airfoils and they may also receive a crack.

One current method of repairing the crack is to form a blend, or to remove a portion of material that includes the crack. Thus, as shown in Figure 1C, there is a blend formed to remove the crack 82. There are three parameters to the blend including a length L which is a flat length between two curved portions C at each radial end of the flat portion 86. There is also a blend depth D and a percentage span S which is the location along the span of the airfoil measured from some reference distance that is receiving the blend. In addition, an aspect ratio (its length-to-depth ratio) of the blend is also considered.

As can be appreciated, at some point a component may have received too many blends and, thus, further blends would not be advised. In addition, in some cases, the damage, such as a crack, may be so extreme that a blend would not be indicated.

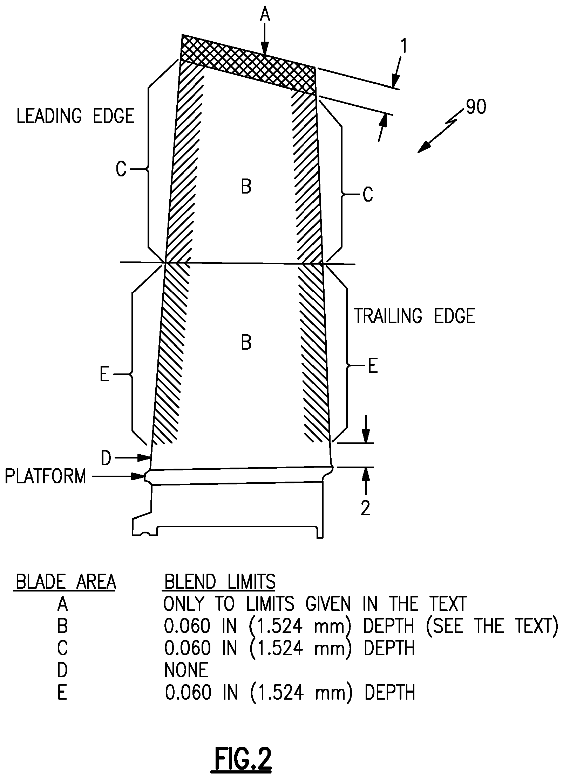

Thus, Figure 2 shows a known blade manual 90 which sets forth the limits of a particular blend and, in particular, areas on the blade. Note, in practice, the limits are likely not all the same. As can be appreciated, these limits are selected to be conservative and to err on the side of removing a part rather than performing a blend. As can be appreciated, there may thus be circumstances in the current method where a part could receive an additional blend, yet such an operation would not take place.

The present disclosure replaces the manual 90. Stated simply, a method and system under this disclosure would initially develop a required blend. Then, the system will perform the step of evaluating whether the initial recommended blend would actually be advisable taking into account the history of not only the component to receive the blend, but perhaps other components on the associated engine. A final recommendation is then reached and transmitted to the location of the component.

As part of this, statistical surrogate models are developed and utilized to determine optimal blend geometries on a case by case basis. The statistical surrogate models are developed from analytical engineering analyses and/or a library of acceptable conditions to repair and center on the parameters D, S and L as shown in Figure 1C. The use of statistical surrogate models enables a system to rapidly customize a blend solution for the engine that allows the engine to be returned to service quickly and safely. In fact, some engine have ports that allow access to the compressor such that the blending can be done without removing the engine from the aircraft. The acceptable parameters that can be accommodated on a given blade and a given compressor are calculated given the history of the compressor to be repaired. Additionally, multiple blend types can be considered including spherical, flat bottom, and tip blends. Note while a compressor is mentioned, this disclosure also provides benefits to turbine sections.

The surrogate models assess the blended airfoils high cycle fatigue capabilities and an operability model will determine the blends impact to a compressor's stall margin. The software may then output optimized geometric parameters, blend depth, aspect ratio, flat length, and percent span to produce an acceptable blend.

By utilizing this disclosed method, an aircraft operator will be allowed to provide an increased number of blends and continue engine operation. Alternatively, in an overhaul shop environment, a blend could be used to eliminate further work such as replacement of an integrally bladed rotor. This will reduce the cost of further work that may be unnecessary. Alternatively, some stages may be provided with a blend and a more heavily damaged stage could be replaced, thereby salvaging at least part of the compressor section.

A service operator in the field will measure the damage, such as its depth, its span-wise location, and damage type, as examples. The operator inputs these parameters to be sent to the system to develop a recommended blend geometry utilizing these statistical surrogate models.

Each component may have separate models, but there is one integrated process for various disciplines. As an example, the advisability of an additional blend may be evaluated based upon stability, aerodynamic performance, vibratory stress and mistuning assessments. Further, this determination can be based on knowledge of conditions of other stages within the particular compressor section which is to receive the blend, and including blends that have been perhaps performed on components in that compressor section in the past.

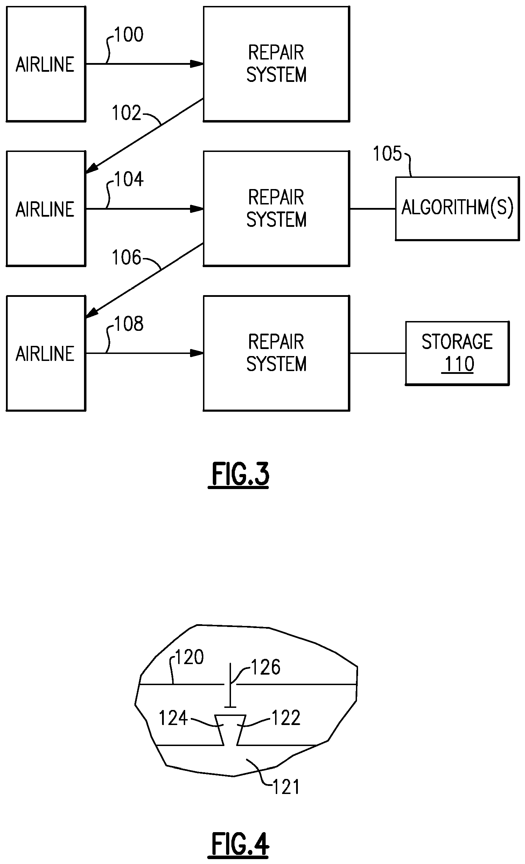

As shown in Figure 3, a maintenance individual at the engine will then get an answer in a very short period of time utilizing the statistical surrogates.

A maintenance operator, such as an airline, submits information at 100 to the repair system. The information 100 may include an engine serial number, a module serial number, the number of flights to this point for the engine, and any particular components to be considered. In addition, various pressure and temperature information recorded in the engine's electronic control (or other recording device, or streamed off of the aircraft in some other manner) may be provided. Also, total engine cycles may be provided which can be used in an assessment of the engine's overall health, time to next overhaul, and compressor efficiency and stall margin in the engine's current state where a blend is being considered.

This pressure and temperature data can be broadly considered "conditions" for purposes of this disclosure. As an example, if the temperature downstream of the last compressor stage is different than expected, such as the temperature being higher than expected with the pressure being lower than expected, this may imply that a component within the compressor has significant wear. Further, if the engine has a lower than expected exhaust gas temperature margin, or a turbine temperature margin is not as expected, then this might point to a decision not to suggest further blends.

In an alternative method, an assessment of the physical erosion of a particular component may be made utilizing representative photos. In the repair system, this information is compared to historic experience in the surrogate model.

From this initial communication, an engine history can be developed at the repair system. If the number of existing blends are already very high, it may be desirable not to repair the blend on the engine. Further, if other components or modules of the engine are reflecting a major repair being required soon, a blend may not be recommended.

The repair system then develops preliminary stability assessment based upon hours and cycles in flight and also experience. The amount of surge margin in the particular engine's series is considered. The amount of erosion for a particular airline operator may be considered. Also, the historic number of blends in the component to be repaired, as well as the overall compressor may be considered.

A preliminary stability assessment is then made which may indicate that a blend may not be recommended and that an overhaul or redo may be suggested. This may be communicated back to the maintenance operator at line 102.

The maintenance operator also provides information at 104 to the repair system including damage measurements of any airfoil to be repaired. Pictures of the new damage or scalable pictures of the location of previous blend repairs may be provided. This is input into an emulator algorithm 105 to assess the stability margin if the new damage is repaired by a blend.

The analysis is based upon an emulator algorithm and the emulator algorithm may be a regression of at least two analysis points of different blend geometries, locations or sizes. In one embodiment, the analysis is complemented by at least one of a stability and a performance assessment.

Then, a blend recommendation is sent back at 106. The emulator will produce the suggested blends quickly and will also check the aggregate, for example, the impact of proposed blends on compressor exit temperature for turbine cooling, speed margins versus redline speeds for expected ambient and expected thrust requirements, and for other useful EGT targets.

As mentioned elsewhere, the final recommendation may be that a blend should not be performed. Also, the final recommendation may be that a blend could be performed if the component, or perhaps its engine, is utilized in a less stressful application. As one example, the component could be moved to an engine operating at a lower thrust level.

Again, the algorithms may be developed utilizing analytical models, electronic engine models populated with discrete sensor data, and/or historic data from real world components which have been evaluated and stored in the emulator 105. The analytic models may be physics based, empirical, or semi-empirical.

The recommended blend repair may be developed based upon the measured damage to at least one airfoil using a structural and vibratory algorithm that includes a structural assessment of the blade geometry of the blade post blending based upon the dimensions of the damage to the airfoil and material remaining after repair.

The stability or performance may be assessed for at least one of a compressor section stability margin, performance change based upon a suggested blend, performance level, exhaust gas temperature margin relative to EGT limits, or a rotor speed margin to its redline limit. These assessments are based on at least one measured engine parameter, such as exhaust gas temperature margin relative to a maximum exhaust gas temperature. The limits will reflect the effect that a proposed blend repair will have on the engine or compressor.

In another embodiment, the stability or performance assessment may propose a blend based on at least one of the number of flights on a particular module to be prepared, a physical examination of hardware, including the shape of an outer air seal rub, or the leading edge condition of a blade relative to an uneroded portion.

In another embodiment, the assessment may be based on at least one of a normalized and measured compressor parameter, such as compressor exit temperature at a flight condition normalized to an ambient temperature, or a corrected speed, or a ratio of temperatures and pressure at a constant speed. In a further alternative, a simple comparison of fleet data for these parameters at a particular flight condition may be assessed to support an approximate assessment that judges a compressor as being suitable or unsuitable for additional blending based upon fleet surge, history, and experience.

In another embodiment, the assessment may be based on at least one normalized compressor parameter within fleet data and a quantitative assessment of the compressor as being suitable or unsuitable relative to a history of similar engines to support a decision to incorporate a proposed blend. Blending of the airfoil changes the overall incidence of air. At high incidence, the flow begins to separate. The foil no longer is able to sustain the pressure rise required of it, and the foil stalls. In a turbine engine, since the foils can no longer support the pressure rise, the higher pressure downstream of the stalled foil or row rapidly propagates forward in the compressor and the complete compressor no longer functions. The engine fails to operate, as a stalled compressor results in an engine that generates insufficient thrust. Thus, a blend should not be implemented if there is a risk of this occurring.

Further, past repaired damage is considered when considering a future recommended blend.

Further, the algorithm may include an assessment of erosion of the blade, stage or module to assess the stability characteristics of the blended component.

As can be appreciated, more than one blend may be suggested, or not suggested, and provided to a maintenance location as a combined recommendation.

The assessment may also include assessment of margins relative to at least one operational limit after the repairs are completed. Further, the assessment includes structural, stability and performance assessments after the blends are completed.

This disclosure could be summarized as a method of suggesting appropriate blends to an airfoil, wherein the suggested blend is considered for structural adequacy based on at least one of system frequencies, mode shapes, mistuning characteristics, vibratory stresses, or material capability from a variety of engine conditions. Further, this analysis of a blend recommendation may be customized for a specific blade whereby the customer receives an acceptable blend in minutes.

The maintenance location may then make the blend repairs. As shown for example, in Figure 4, an integrally bladed rotor 121 is shown with a blade 122 having a crack 124. An engine housing 120 surrounds the rotor 121, which is part of a compressor section. A blending tool 126 is shown schematically entering into a bore in the housing 120 such that a blend may be provided, as suggested by the above method, while the rotor is still on the engine and aircraft.

Returning to Figure 3, at 108, the maintenance system then reports what was actually done with regard to the recommended blends back to the repair system. The repair system now updates and stores at storage 110 a summary of the actual blends as performed.

The repair is actually made through a borescope port in an engine housing.

The system as suggested provides a powerful maintenance tool and also facilitates further optional steps.

The communication between the maintenance operator and the repair system may be computer-based, wireless, or any other method of communication.

A method of developing a suggested blend repair to an airfoil could be summarized as including the steps of (a) storing history with regard to a particular airfoil in a particular engine; (b) taking information with regard to new damage to the particular airfoil; (c) reaching an initial blend recommendation based upon step (b); (d) assessing whether the initial blend recommendation of step (c) would be appropriate to repair the new damage based upon a consideration of steps (a) - (c); and (e) reporting a final recommended blend.

A worker of ordinary skill in the art would recognize the appropriate computer technology and transmission technologies to provide repair system algorithms as shown in Figure 3.

An airfoil repair recommendation system includes a controller having a receiver, an evaluation module, and a repair module. The controller includes at least a non-transitory memory and a processor. The receiver includes an input configured to receive information with regard to a particular airfoil, and an output communicatively coupled to the evaluation module. The evaluation module includes instructions configured to cause the controller to analyze the received information utilizing algorithms and determine whether a blend may be recommended. The repair module includes instructions configured to cause the controller to develop a recommendation with regard to the airfoil being considered and to cause the controller to transmit that information to a location of the airfoil.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A method of repairing an airfoil (84) of a compressor blade (80; 122) of a gas turbine engine, the method comprising:
developing a suggested blend repair to the airfoil (84) (20) comprising the steps of:
(a) storing history with regard to a particular airfoil (84) of a compressor blade (80; 122) in a particular gas turbine engine (20), wherein the history includes a surge history for the gas turbine engine (20);
(b) taking information with regard to new damage (124) to the particular airfoil (84);
(c) reaching an initial blend recommendation based upon step (b);
(d) assessing whether the initial blend recommendation of step (c) would be appropriate to repair the new damage (124) based upon a consideration of steps (a) - (c); and
(e) reporting a final blend recommendation,
wherein the final blend recommendation is performed utilizing borescopic blending.

2. The method as set forth in claim 1, wherein the history further includes a number of flights of the engine, and/or information with regard to an actual condition of the engine (20).

3. The method as set forth in claim 1 or 2, wherein the final blend recommendation is also based upon stored history of components in the engine other than the particular airfoil (84).

4. The method as set forth in any preceding claim, wherein the history of prior blends in the particular airfoil (84) is considered in the assessment of step (d).

5. The method as set forth in any preceding claim, wherein the initial blend recommendation includes at least a recommended blend depth, flat length, and percent span.

6. The method as set forth in any preceding claim, wherein pressure, temperature, and/or speed history for an engine (20) incorporating the damaged airfoil (84) is considered at step (d).

7. The method as set forth in any preceding claim, wherein the final blend recommendation is transmitted to a maintenance operator.

8. The method as set forth in claim 7, wherein the maintenance operator provides performed blend information back to a repair system with regard to the performance of the final blend recommendation, and optionally wherein the performed blend information is stored in the repair system, such that it can be considered if the particular airfoil, or a module incorporating the particular airfoil (84), is subject to further damage.

9. The method as set forth in any preceding claim, wherein the final blend recommendation includes both a blend to be performed, but also instruction to use the particular airfoil (84) in an engine (20) subjecting the particular airfoil to less stress or to lower thrust.

10. The method as set forth in any preceding claim, wherein the information is analyzed utilizing an algorithm to reach the initial blend recommendation, said algorithm developed utilizing historic information and/or analytic models.

11. A repair recommendation system for an airfoil (84) of a compressor blade (80; 122) of a gas turbine engine (20) comprising:
a controller having a receiver, an evaluation module, and a repair module, the controller including at least a non-transitory memory and a processor;
the receiver including an input configured to receive information with regard to a particular airfoil (84) of a compressor blade (80; 122) of a gas turbine engine (20), and an output communicatively coupled to said evaluation module, wherein the information includes a surge history for the engine (20);
the evaluation module including instructions configured to cause the controller to analyze the received information utilizing an algorithm and determine whether a blend may be recommended; and
the repair module including instructions configured to cause the controller to develop a final blend recommendation with regard to the airfoil (84) being considered and to cause the controller to transmit that final blend recommendation to a location of the airfoil (84) to allow a recommended blend repair utilizing borescopic blending of the airfoil (84).

12. The system of claim 11, wherein each of the evaluation module and the repair module are software, and are stored in said non-transitory memory.

13. The system as set forth in claim 11 or 12, wherein said receiver configured for receiving information of a blend performed on the particular airfoil (84), and updating stored information with regard to the airfoil (84).

14. The system as set forth in any of claims 11 to 13, wherein the controller is configured to develop a blend recommendation at least in part upon the condition of other components in the engine (20).

15. The system as set forth in any of claims 11 to 14, wherein the controller is configured to develop a final blend recommendation that a blend is not recommended for the airfoil (84).

## Patentansprüche

1. Verfahren zur Reparatur eines Schaufelblatts (84) einer Verdichterschaufel (80; 122) eines Gasturbinentriebwerks, wobei das Verfahren umfasst:
Entwickeln einer vorgeschlagenen Blending-Reparatur an dem Schaufelblatt (84) (20), das die folgenden Schritte umfasst:
(a) Speichern einer Vorgeschichte in Bezug auf ein bestimmtes Schaufelblatt (84) einer Verdichterschaufel (80; 122) in einem bestimmten Gasturbinentriebwerk (20), wobei die Vorgeschichte eine Pumpvorgeschichte für das Gasturbinentriebwerk (20) beinhaltet;
(b) Erheben von Informationen in Bezug auf neue Beschädigung (124) an dem bestimmten Schaufelblatt (84);
(c) Erreichen einer anfänglichen Blending-Empfehlung basierend auf Schritt (b);
(d) Beurteilen, ob die anfängliche Blending-Empfehlung von Schritt (c) geeignet wäre, um die neue Beschädigung (124) basierend auf einer Berücksichtigung der Schritte (a) - (c) zu reparieren; und
(e) Melden einer endgültigen Blending-Empfehlung,
wobei die endgültige Blending-Empfehlung unter Einsetzen von Boreskop-Blending durchgeführt wird.

2. Verfahren nach Anspruch 1, wobei die Vorgeschichte ferner eine Anzahl von Flügen des Triebwerks und/oder Informationen in Bezug auf einen tatsächlichen Zustand des Triebwerks (20) beinhaltet.

3. Verfahren nach Anspruch 1 oder 2, wobei die endgültige Blending-Empfehlung auch auf einer gespeicherten Vorgeschichte anderer Komponenten in dem Triebwerk als dem bestimmten Schaufelblatt (84) basiert.

4. Verfahren nach einem vorstehenden Anspruch, wobei die Vorgeschichte von früherem Blending in dem bestimmten Schaufelblatt (84) bei der Beurteilung des Schritts (d) berücksichtigt wird.

5. Verfahren nach einem vorstehenden Anspruch, wobei die anfängliche Blending-Empfehlung mindestens eine empfohlene Tiefe, flache Länge und prozentuale Spanne des Blendings beinhaltet.

6. Verfahren nach einem vorstehenden Anspruch, wobei Druck-, Temperatur- und/oder die Geschwindigkeitsvorgeschichte für ein Triebwerk (20), das das beschädigte Schaufelblatt (84) enthält, in Schritt (d) berücksichtigt wird.

7. Verfahren nach einem vorstehenden Anspruch, wobei die endgültige Blending-Empfehlung an einen Wartungstechniker übermittelt wird.

8. Verfahren nach Anspruch 7, wobei der Wartungstechniker Informationen über durchgeführtes Blending zu einem Reparatursystem in Bezug auf die Durchführung des endgültigen Blendings zurückgibt, und wobei wahlweise die Informationen über durchgeführtes Blending in dem Reparatursystem derart gespeichert werden, dass sie berücksichtigt werden können, falls das bestimmte Schaufelblatt oder ein Modul, das das bestimmte Schaufelblatt (84) enthält, Gegenstand weiterer Beschädigung ist.

9. Verfahren nach einem vorstehenden Anspruch, wobei die endgültige Blending-Empfehlung sowohl ein durchzuführendes Blending als auch eine Anweisung zur Verwendung des bestimmten Schaufelblatts (84) in einem Triebwerk (20) beinhaltet, das das bestimmte Schaufelblatt weniger Belastung oder geringerem Schub aussetzt.

10. Verfahren nach einem vorstehenden Anspruch, wobei die Informationen unter Einsetzen eines Algorithmus analysiert werden, um die anfängliche Blending-Empfehlung zu erreichen, wobei der Algorithmus unter Einsetzen von Vorgeschichteinformationen und/oder von analytischen Modellen entwickelt wird.

11. Reparaturempfehlungssystem für ein Schaufelblatt (84) einer Verdichterschaufel (80; 122) eines Gasturbinentriebwerks (20), umfassend:
einen Controller, der einen Empfänger, ein Bewertungsmodul und ein Reparaturmodul aufweist, wobei der Controller mindestens einen nichtflüchtigen Speicher und einen Prozessor beinhaltet; wobei der Empfänger einen Eingang, der dazu konfiguriert ist, Informationen in Bezug auf ein bestimmtes Schaufelblatt (84) einer Verdichterschaufel (80; 122) eines Gasturbinentriebwerks (20) zu empfangen, und einen Ausgang, der kommunikativ an das Bewertungsmodul gekoppelt ist, beinhaltet, wobei die Informationen eine Pumpvorgeschichte für das Triebwerk (20) beinhalten;
wobei das Bewertungsmodul Anweisungen beinhaltet, die dazu konfiguriert sind, den Controller zu veranlassen, die empfangenen Informationen unter Einsetzen eines Algorithmus zu analysieren und zu bestimmen, ob ein Blending empfohlen werden kann; und
wobei das Reparaturmodul Anweisungen beinhaltet, die dazu konfiguriert sind, den Controller zu veranlassen, eine endgültige Blending-Empfehlung in Bezug auf das berücksichtigte Schaufelblatt (84) zu entwickeln, und den Controller zu veranlassen, diese endgültige Blending-Empfehlung an einen Ort des Schaufelblatts (84) zu übertragen, um eine empfohlene Blending-Reparatur unter Einsetzen von Boreskop-Blending des Schaufelblatts (84) zu erlauben.

12. System nach Anspruch 11, wobei sowohl das Bewertungsmodul als auch das Reparaturmodul Software sind und in dem nichtflüchtigen Speicher gespeichert sind.

13. System nach Anspruch 11 oder 12, wobei der Empfänger dazu konfiguriert ist, Informationen über ein Blending, das an dem bestimmten Schaufelblatt (84) durchgeführt wird, zu empfangen und gespeicherte Informationen in Bezug auf das Schaufelblatt (84) zu aktualisieren.

14. System nach einem der Ansprüche 11 bis 13, wobei der Controller dazu konfiguriert ist, eine Blending-Empfehlung mindestens zum Teil basierend auf dem Zustand anderer Komponenten in dem Triebwerk (20) zu entwickeln.

15. System nach einem der Ansprüche 11 bis 14, wobei der Controller dazu konfiguriert ist, eine endgültige Blending-Empfehlung, dass ein Blending für das Schaufelblatt (84) nicht empfohlen wird, zu entwickeln.

## Revendications

1. Procédé de réparation d'une pale (84) d'une aube de compresseur (80 ; 122) d'un moteur à turbine à gaz, le procédé comprenant :
le développement d'une réparation de mélange suggérée pour la pale (84) (20) comprenant les étapes :
(a) de stockage de l'historique concernant une pale particulière (84) d'une aube de compresseur (80 ; 122) dans un moteur à turbine à gaz particulier (20), dans lequel l'historique comporte un historique des surtensions pour le moteur à turbine à gaz (20) ;
(b) de prise d'informations concernant de nouveaux dommages (124) à la pale particulière (84) ;
(c) d'obtention d'une recommandation de mélange initiale sur la base de l'étape (b) ;
(d) d'évaluation pour savoir si la recommandation de mélange initiale de l'étape (c) serait appropriée pour réparer le nouveau dommage (124) sur la base d'un examen des étapes (a) à (c) ; et
(e) de signalement d'une recommandation de mélange finale,
dans lequel la recommandation de mélange finale est effectuée à l'aide d'un mélange boroscopique.

2. Procédé selon la revendication 1, dans lequel l'historique comporte en outre un nombre de vols du moteur, et/ou des informations concernant un état réel du moteur (20).

3. Procédé selon la revendication 1 ou 2, dans lequel la recommandation de mélange finale est également basée sur l'historique stocké des composants dans le moteur autres que la pale particulière (84).

4. Procédé selon une quelconque revendication précédente, dans lequel l'historique des mélanges antérieurs dans la pale particulière (84) est pris en compte dans l'évaluation de l'étape (d).

5. Procédé selon une quelconque revendication précédente, dans lequel la recommandation de mélange initiale comporte au moins une profondeur de mélange recommandée, une longueur à plat et un pourcentage d'étendue.

6. Procédé selon une quelconque revendication précédente, dans lequel la pression, la température, et/ou l'historique de vitesse pour un moteur (20) incorporant la pale endommagée (84) est pris en compte à l'étape (d).

7. Procédé selon une quelconque revendication précédente, dans lequel la recommandation de mélange finale est transmise à un opérateur de maintenance.

8. Procédé selon la revendication 7, dans lequel l'opérateur de maintenance fournit des informations de mélange effectué à un système de réparation en ce qui concerne la performance de la recommandation de mélange finale, et éventuellement dans lequel les informations de mélange effectué sont stockées dans le système de réparation, de sorte qu'elles peuvent être prises en compte si la pale particulière, ou un module incorporant la pale particulière (84), est soumis à d'autres dommages.

9. Procédé selon une quelconque revendication précédente, dans lequel la recommandation de mélange finale comporte à la fois un mélange à effectuer, mais également des instructions pour utiliser la pale particulière (84) dans un moteur (20) soumettant la pale particulière à moins de contraintes ou pour réduire la poussée.

10. Procédé selon une quelconque revendication précédente, dans lequel les informations sont analysées à l'aide d'un algorithme pour obtenir la recommandation de mélange initiale, ledit algorithme étant développé à l'aide d'informations historiques et/ou de modèles analytiques.

11. Système de recommandation de réparation pour une pale (84) d'une aube de compresseur (80 ; 122) d'un moteur à turbine à gaz (20) comprenant :
un dispositif de commande ayant un récepteur, un module d'évaluation et un module de réparation, le dispositif de commande comportant au moins une mémoire non transitoire et un processeur ;
le récepteur comportant une entrée configurée pour recevoir des informations concernant une pale particulière (84) d'une aube de compresseur (80 ; 122) d'un moteur à turbine à gaz (20), et une sortie couplée en communication audit module d'évaluation, dans lequel les informations comportent un historique des surtensions pour le moteur (20) ;
le module d'évaluation comportant des instructions configurées pour amener le dispositif de commande à analyser les informations reçues à l'aide d'un algorithme et à déterminer si un mélange peut être recommandé ; et
le module de réparation comportant des instructions configurées pour amener le dispositif de commande à développer une recommandation de mélange finale en ce qui concerne la pale (84) prise en compte et pour amener le dispositif de commande à transmettre cette recommandation de mélange finale à un emplacement de la pale (84) pour permettre une réparation de mélange recommandée à l'aide d'un mélange boroscopique de la pale (84).

12. Système selon la revendication 11, dans lequel chacun du module d'évaluation et du module de réparation sont des logiciels, et sont stockés dans ladite mémoire non transitoire.

13. Système selon la revendication 11 ou 12, dans lequel ledit récepteur est configuré pour recevoir des informations d'un mélange effectué sur la pale particulière (84) et mettre à jour les informations stockées concernant la pale (84).

14. Système selon l'une quelconque des revendications 11 à 13, dans lequel le dispositif de commande est configuré pour développer une recommandation de mélange au moins en partie sur l'état d'autres composants dans le moteur (20).

15. Système selon l'une quelconque des revendications 11 à 14, dans lequel le dispositif de commande est configuré pour développer une recommandation de mélange finale indiquant qu'un mélange n'est pas recommandé pour la pale (84).
